# EUROPÄISCHE PATENTSCHRIFT

(11) **EP 3 256 427 B1**
(45) Veröffentlichungstag und Bekanntmachung des Hinweises auf die Patenterteilung: **09.09.2020**
(21) Anmeldenummer: 16702330.8
(22) Anmeldetag: 29.01.2016
(51) Int. Cl.: C02F 9/00, C02F 1/42, C02F 1/32, C02F 1/44, C02F 1/28, C02F 1/20, C02F 1/04, C02F 103/00, B01D 61/04, B01D 61/08

(54) **REINIGUNGSVORRICHTUNG UND VERWENDUNG FÜR WASSER MIT NUTZUNG VON FILTERKARTUSCHEN**
WATER TREATMENT APPARATUS AND METHOD WITH THE USAGE OF FILTER MEDIA CARTRIDGES
DISPOSITIF ET PROCÉDÉ DE TRAÎTEMENT DE L'EAU AVEC L'UTILISATION DE CARTOUCHES

(30) Priorität: 12.02.2015 DE 102015102011
(43) Veröffentlichungstag der Anmeldung: 20.12.2017
(73) Patentinhaber: Sartorius Lab Instruments GmbH & Co. KG, 37079 Göttingen (DE)
(72) Erfinder: WALTER, Fabian, 37154 Northeim (DE); GRABOSCH, Matthias, 37120 Bovenden (DE); RITZKA, Roman, 37434 Obernfeld (DE); PURMANN, Sebastian, 37073 Göttingen (DE); GRÖSCHE, Dennis, 37077 Göttingen (DE); LOHRBERG, Martin, 37136 Ebergötzen (DE)
(74) Vertreter: Vigand, Philippe
(86) Internationale Anmeldenummer: PCT/EP2016/000151
(87) Internationale Veröffentlichungsnummer: WO 2016/128115

(56) Entgegenhaltungen:
- EP-A1- 1 219 342
- WO-A1-2014/204000
- CH-B1- 704 440
- DE-A1-102004 049 877
- DE-B4- 10 195 254
- DE-C1- 19 828 840
- US-A- 5 078 876
- US-A- 5 919 357
- US-B2- 8 414 767

## Beschreibung

### Technisches Gebiet

Die vorliegende Offenbarung betrifft eine Reinigungsvorrichtung für Wasser.

### Hintergrund

In der Wasserreinigung insbesondere für Laborzwecke werden häufig Behälter eingesetzt, die ein Medium beinhalten, welches das Wasser reinigt. Diese Behälter werden auch Kartuschen genannt.

Dabei wird häufig in einer ersten Reinigungsstufe das zu reinigende Wasser durch einen Filter geleitet, beispielsweise aus Aktivkohle oder einem Ionenaustauscher, während in einer zweiten Reinigungsstufe das zu reinigende Wasser durch ein Umkehrosmosemodul geleitet wird.

Weitere Reinigungselemente, wie z.B. eine Fritte oder eine UV-Lampe oder ein weiterer Ionenaustauscher, können hinzukommen.

Aus Platzgründen wird die erste Reinigungsstufe mit der zweiten Reinigungsstufe in einem gemeinsamen Gerät integriert.

Sind die erste Reinigungsstufe und die zweite Reinigungsstufe in getrennten Gehäusen untergebracht, ist dies aus Platzgründen nicht optimal. Außerdem müssen beide Stufen miteinander eine ggf. fehleranfällige hydraulische Verbindung (z.B. Schlauchverbindung) aufweisen.

Eine konzentrische Anordnung der beiden Reinigungsstufen in einem Gehäuse (beispielsweise die zweite Reinigungsstufe in Form eines Kanals, der von der ersten Reinigungsstufe konzentrisch umgeben ist) ist beispielsweise in US Patent 8414767 offenbart.

Eine solche Anordnung ist jedoch aus strömungstechnischen Gründen nicht optimal, weil dabei die außenliegende Reinigungsstufe ein schlechtes Oberflächen-Volumen-Verhältnis aufweist, was die Durchströmung und Kontaktierung des Materials negativ beeinflusst und damit etwaige Adsorptionen beeinträchtigt. Auch fertigungstechnisch zeigen sich bei einer solchen Anordnung Probleme.

In US Patent 5078876 ist ebenfalls eine konzentrische Anordnung beider Reinigungsstufen in einem Gehäuse offenbart.

Ebensolche Nachteile weist eine Ausführungsform auf, bei welcher die beiden Reinigungsstufen jeweils in Form eines Halbzylinders in einem zylindrischen Gehäuse angeordnet sind. Hier kommt hinzu, dass ein halbzylindrischer Querschnitt nicht geeignet ist, handelsübliche Umkehrosmosemodule aufzunehmen, die einen kreisrunden Querschnitt aufweisen.

Die DE 10 195 254 B4 beschreibt eine Reinigungsvorrichtung mit ovalem Querschnitt für Wasser mit zwei Reinigungsstufen jeweils in Form eines Zylinders, welche nebeneinander im Gehäuse angeordnet sind.

Weitere Reinigungsvorrichtungen mit nebeneinander angeordneten Reinigungsstufen sind in DE 10 2004 049 877 A1, DE 198 28 840 C1, CH 704 440 B1 und WO 2014/204000 A1 offenbart.

Aufgabe der vorliegenden Erfindung ist es daher, eine Reinigungsvorrichtung für Wasser bereitzustellen, die über ein erstes und zweites Reinigungsmedium verfügt und die oben genannten Nachteile nicht aufweist.

Es ist eine weitere Aufgabe der vorliegenden Erfindung, eine Reinigungsvorrichtung für Wasser bereitzustellen, die über ein erstes und zweites Reinigungsmedium verfügt und kompaktere Abmessungen aufweist.

Es ist eine weitere Aufgabe der vorliegenden Erfindung ist es daher, eine Reinigungsvorrichtung für Wasser bereitzustellen, die über ein erstes und zweites Reinigungsmedium verfügt und die geeignet ist, handelsübliche Umkehrosmosemodule aufzunehmen, ohne dass es dabei zu strömungstechnischen Problemen kommt.

Diese und andere Aufgaben werden durch hier beschriebene Verfahren bzw. Vorrichtungen erfüllt. Wertebereiche die durch numerische Werte begrenzt sind, sollen stets die besagten Grenzwerte beinhalten.

### Zusammenfassung

Offenbart ist eine Reinigungsvorrichtung für Wasser, aufweisend ein Gehäuse mit einer Längsachse, einem oberen und einem unteren Ende und einen im Wesentlichen runden Querschnitt, welcher Ausnehmungen aufweist. Die Reinigungsvorrichtung weist ferner auf eine parallel zur Längsachse des Gehäuses angeordnete Aufnahme für ein erstes Reinigungsmedium, sowie eine parallel zur Längsachse des Gehäuses angeordnete Aufnahme für ein zweites Reinigungsmedium. Die Aufnahme für das zweite Reinigungsmedium ist dabei exzentrisch zur Längsachse des Gehäuses angeordnet und weist einen im Wesentlichen runden Querschnitt auf. Die Aufnahme für das erste Reinigungsmedium weist einen im Wesentlichen sichelförmigen Querschnitt auf. Weiterhin weist die Reinigungsvorrichtung zwei parallel zur Längsachse des Gehäuses angeordnete Auf- oder Abstiegskanäle für zu reinigendes Wasser auf. Die Aufnahme für das erste Reinigungsmedium, die Auf- oder Abstiegskanäle und die Ausnehmungen nehmen die nicht von der Aufnahme (13) für das zweite Reinigungsmedium eingenommene Fläche des Gehäuses (11) ein. Jeweils ein Auf- oder Abstiegskanal (14,15) grenzt an die äußeren Ecken der Aufnahme (12) für das erste Reinigungsmedium an.

Die Reinigungsvorrichtung weist weiterhin mindestens einen Deckel auf, der am oberen Ende des Gehäuses angeordnet ist, wobei besagter Deckel einen Einlass für das zu reinigende Wasser, einen Auslass für das gereinigte Wasser und einen Auslass für bei der Reinigung anfallende Konzentrat aufweist, sowie einen Bereich, der bei Anordnung des Deckels auf dem Gehäuse oberhalb der Aufnahme für das Umkehrosmosemodul zu liegen kommt, einen Sammelbereich, der bei Anordnung des Deckels auf dem Gehäuse oberhalb des inneren Kanals des Umkehrosmosemoduls zu liegen kommt und fluidisch mit dem Auslass für gereinigtes Wasser verbunden ist, einen Bereich, der bei Anordnung des Deckels auf dem Gehäuse oberhalb der Aufnahme für das erste Reinigungsmedium zu liegen kommt und fluidisch mit dem Einlass verbunden ist, sowie Bereiche, die bei Anordnung des Deckels auf dem Gehäuse oberhalb der Aufstiegskanäle zu liegen kommen. Dabei ist der Bereich, der auf dem zweiten Aufstiegskanal zu liegen kommt, fluidisch mit dem Auslass für Konzentrat verbunden. Der Deckel weist weiterhin einen Durchlass auf, durch welchen Wasser aus dem zweiten Aufstiegskanal in den Bereich der Aufnahme für das zweite Reinigungsmedium strömen kann.

Die Reinigungsvorrichtung weist weiterhin ein Fußelement auf, das am unteren Ende des Gehäuses angeordnet ist, mit Bereichen, die so ausgelegt sind, dass sie geometrisch zu Elementen der Reinigungsvorrichtung passen und bei Anordnung des Fußelements an dem Gehäuse unterhalb der Aufnahmen für das zweite und das erste Reinigungsmedium bzw. unterhalb der Aufstiegskanäle zu liegen kommen. Das Fußelement weist zwei Durchlässe auf, durch welche Wasser aus dem ersten Reinigungsmedium in den ersten Aufstiegskanal und aus dem zweiten Reinigungsmedium in den zweiten Aufstiegskanal strömen kann.

In typischen Ausführungsformen liegt die Längsachse des Gehäuses innerhalb der Aufnahme für das zweite Reinigungsmedium. Dabei ist diese Aufnahme wie vorangehend angegeben allerdings exzentrisch zur Längsachse des Gehäuses angeordnet.

Der runde Querschnitt des Gehäuses bestimmt typischerweise im Wesentlichen die Form des Gehäuses der Reinigungsvorrichtung. Der runde Querschnitt ist in der Regel über die gesamte Höhe bzw. Länge der Reinigungsvorrichtung zumindest im Wesentlichen einheitlich. Die Aufnahme für das erste Reinigungsmedium und die Aufnahme für das zweite Reinigungsmedium sind in der Regel innerhalb des runden Querschnitts des Gehäuses angeordnet, der die Form des Gehäuses der Reinigungsvorrichtung im Wesentlichen bestimmt. Die Dimensionen der Aufnahme für das erste Reinigungsmedium und der Aufnahme für das zweite Reinigungsmedium sind in der Regel entlang der gesamte Höhe bzw. Länge der Reinigungsvorrichtung zumindest im Wesentlichen einheitlich.

In einer Ausführungsform weist die Reinigungsvorrichtung ein Gehäuse mit einer Längsachse, einem oberen und einem unteren Ende und einen im Wesentlichen runden Querschnitt auf. Innerhalb des Gehäuses befinden sich in dieser Ausführungsform eine parallel zur Längsachse des Gehäuses angeordnete erste Aufnahme für ein erstes Reinigungsmedium, sowie eine parallel zur Längsachse des Gehäuses angeordnete zweite Aufnahme für ein zweites Reinigungsmedium. Dabei ist die Aufnahme für das zweite Reinigungsmedium innerhalb des kreisrunden Querschnitts des Gehäuses und exzentrisch zur Längsachse des Gehäuses angeordnet.

Die Aufnahme für das erste Reinigungsmedium kann in einigen Ausführungsformen ein Raum sein, der durch vier seitliche Wände definiert wird. Dabei kann eine erste Wand dieses Raums durch einen Abschnitt einer Wand des Gehäuses definiert werden. Eine der ersten Wand gegenüberliegende Wand kann durch einen Abschnitt einer Wand der Aufnahme für das zweite Reinigungsmedium definiert werden. Die vier seitlichen Wände können in einigen Ausführungsformen unabhängig voneinander eine Dicke im Bereich von etwa 2 bis 5 mm aufweisen. In einer Ausführungsform weisen alle vier seitlichen Wände eine Dicke von etwa 3,5 mm auf.

In einigen Ausführungsformen wird die Aufnahme für das erste Reinigungsmedium durch einen Raum definiert, der ein Volumen von etwa 100 bis 1000 ml fasst. In einer beispielhaften Ausführungsform fasst der Raum der Aufnahme für das erste Reinigungsmedium ein Volumen von etwa 680 ml.

Die Aufnahme für das erste Reinigungsmedium ist in einigen Ausführungsformen dazu ausgelegt, eine Schüttung aus Harzen und/oder Aktivkohle aufzunehmen. Beim Verwenden solcher Ausführungsformen kann die Aufnahme für das erste Reinigungsmedium dementsprechend mit einem Harz und/oder Aktivkohle befüllt werden.

Die Aufnahme für das erste Reinigungsmedium weist in einigen Ausführungsformen keine innerhalb der Aufnahme angeordneten Wände oder Elemente auf. In einigen Ausführungsformen sind in der Aufnahme für das erste Reinigungsmedium eine oder mehrere mechanische Barrieren vorgesehen, die dazu ausgelegt sind, eine Durchmischung unterschiedlicher Filtermaterialien, beispielsweise Schüttungen, zu verhindern. Entsprechende Barrieren können dazu ausgelegt sein, unterschiedliche Filtermaterialien voneinander zu trennen. Beispiele einer solchen mechanische Barriere sind eine Fritte oder ein Sieb.

Die Aufnahme für das zweite Reinigungsmedium kann in einigen Ausführungsformen ein Raum sein, der durch eine umlaufende Wand definiert wird. Die umlaufende Wand kann dabei von rundem, beispielsweise kreisrundem, Querschnitt sein. Die umlaufende Wand kann eine Dicke im Bereich von etwa 2 bis 5 mm aufweisen. In einer Ausführungsform weist die umlaufende Wand eine Dicke von etwa 3,5 mm auf.

In einigen Ausführungsformen wird die Aufnahme für das zweite Reinigungsmedium durch einen Raum definiert, der ein Volumen von etwa 100 bis 1000 ml fasst. In einer beispielhaften Ausführungsform fasst der Raum der Aufnahme für das erste Reinigungsmedium ein Volumen von etwa 580 ml.

Die Aufnahme für das zweite Reinigungsmedium erfindungsgemäß dazu ausgelegt, ein vorgefertigtes Reinigungsmodul, ein Umkehrosmose-Modul aufzunehmen. Bei dieser erfindungsgemäßen Verwendung kann die Aufnahme für das zweite Reinigungsmedium dementsprechend mit dem vorgefertigten Umkehrosmosemodul bestückt werden.

Die Aufnahmen für das erste und für das zweite Reinigungsmedium sind in einigen Ausführungsformen durch eine oder mehrere Wände voneinander getrennt. Dabei können die Aufnahmen für das erste und für das zweite Reinigungsmedium zwei unabhängige Räume definieren.

In Bezug auf das zweite Reinigungsmedium nicht erfindungsgemäß: Bei den Reinigungsmedien kann es sich generell um Module, Schüttungen, Patronen oder Kartuschen handeln, die ein Medium ausgewählt aus der Gruppe
- Adsorptionsmittel (z.B. Aktivkohle)
- Filterelemente (z.B. Fritte, Umkehrosmosefilter, Ultrafilter, Hohlfaserfilter, Tiefenfilter, Zellulosefilter)
- Ionenaustauscherharze (z.B. Kationaustauscherharz, Mischbettharz)
- pH-regulierende Substanzen (z.B. Calciumcarbonat, Magnesiumcarbonat)
- Chromatographische Medien (z.B. C18 Silicagel), und/oder
- Katalysatoren
aufweisen. Der Begriff "im wesentlichen runder Querschnitt" bedeutet, dass die Grundfläche des Gehäuses von einer Kreisform, einer Ellipse oder einem Oval abgeleitet ist, aber Ausnehmungen oder ähnliche Modifikationen aufweisen kann. In einigen Ausführungsformen ist besagter im wesentlichen runder Querschnitt ein im Wesentlichen kreisrunder Querschnitt.

In einigen Ausführungsformen ist dabei die Aufnahme für das zweite Reinigungsmedium zwar exzentrisch zur Längsachse des Gehäuses angeordnet, verbleibt jedoch innerhalb des runden Querschnitts, der die Form des Gehäuses der Reinigungsvorrichtung im Wesentlichen bestimmt.

Erfindungsgemäß weist die Reinigungsvorrichtung zwei parallel zur Längsachse des Gehäuses angeordnete Auf- oder Abstiegskanäle auf. In einigen Ausführungsformen sind dabei zwei Aufstiegskanäle vorgesehen, von denen der erste zwischen das erste und das zweite Reinigungsmedium geschaltet ist, während der zweite zwischen das zweite Reinigungsmedium und einen Auslass geschaltet ist, dergestalt, dass zu reinigendes Wasser, dass das erste Reinigungsmedium passiert hat, durch den ersten Aufstiegskanal in das zweite Reinigungsmedium gelangt, und wobei anschließend je nach Ausführungsform gereinigtes Wasser oder Osmoserest ("Schlechtwasser" oder "Konzentrat") durch den zweiten Aufstiegskanal in Richtung Auslass geleitet wird.

Ein Auf- oder Abstiegskanal kann in einigen Ausführungsformen durch vier seitliche Wände definiert werden. Dabei kann eine erste Wand dieses Raums durch einen Abschnitt einer Wand des Gehäuses definiert werden. Eine der ersten Wand gegenüberliegende Wand kann durch einen Abschnitt einer Wand der Aufnahme für das zweite Reinigungsmedium definiert werden. Die vier seitlichen Wände können in einigen Ausführungsformen unabhängig voneinander eine Dicke im Bereich von etwa 2 bis 5 mm aufweisen. In einer Ausführungsform weisen alle vier seitlichen Wände eine Dicke von etwa 3,5 mm auf.

Das Gehäuse der Reinigungsvorrichtung kann in einigen Ausführüngsformen einen Radius im Bereich von etwa 4 bis etwa 10 cm aufweisen. Beispielsweise kann das Gehäuse in einer Ausführungsform einen Radius von etwa 6 cm aufweisen.

Erfindungsgemäß ist ferner vorgesehen, dass das zweite Reinigungsmedium einen im Wesentlichen runden, beispielsweise einen im Wesentlichen kreisrunden Querschnitt aufweist.

Die Aufnahme für das zweite Reinigungsmedium kann in einigen Ausführungsformen durch einen Raum definiert werden, der einen runden, beispielsweise einen im Wesentlichen kreisrunden Querschnitt aufweist. Die Aufnahme für das zweite Reinigungsmedium kann in einigen Ausführungsformen einen Radius im Bereich von etwa 1,5 bis etwa 8 cm aufweisen. Beispielsweise kann die Aufnahme für das zweite Reinigungsmedium in einer Ausführungsform einen Radius von etwa 2,5 cm aufweisen.

Bei dem zweiten Reinigungsmedium handelt es sich erfindungsgemäß um ein Umkehrosmosemodul. Solche Umkehrosmosemodule sind vorkonfektioniert und in Standardmassen erhältlich, beispielsweise zylinderförmig mit einem Durchmesser von 1,8 Zoll (4,57 cm) und einer Gesamtlänge von 12 Zoll (30,5 cm)

In einigen Ausführungsformen handelt es sich bei dem Umkehrosmosemodul um ein sogenanntes Wickelmodul. Hierbei handelt es sich um zwei Flachmembranlagen, die durch Gewebe voneinander getrennt sind und spiralförmig aufgewickelt werden. Dabei entsteht ein konzentrisch angeordneter mittiger Kanal für das sogenannte Gutwasser (Permeat).

In einigen Ausführungsformen ist vorgesehen, dass es sich bei dem zweiten Reinigungsmedium um ein Modul, eine Schüttung, eine Patrone oder eine Kartusche handelt, die eine Aktivkohle-Ionenaustauscher-Harz-Mischung oder -Schichtung enthält.

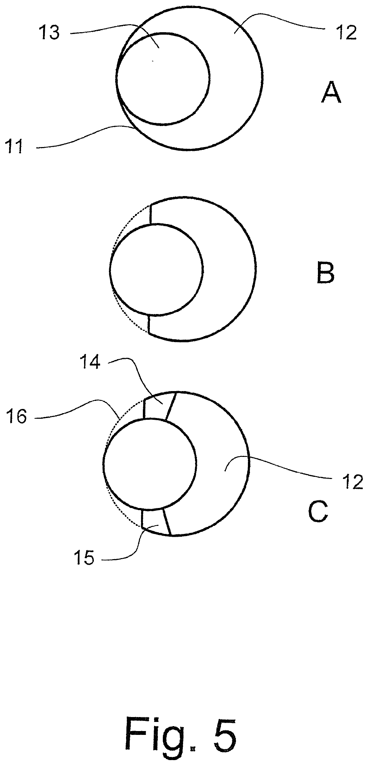

Erfindungsgemäß weist die Aufnahme für das erste Reinigungsmedium einen im Wesentlichen sichelförmigen Querschnitt auf. Diesbezüglich wird insbesondere auf die Figur 5 nebst Beschreibung verwiesen.

In einigen Ausführungsformen ist vorgesehen, dass es sich bei dem ersten Reinigungsmedium um ein Modul, eine Schüttung, eine Patrone oder eine Kartusche handelt, die ein Medium ausgewählt aus der Gruppe
- Aktivkohle
- Ionenaustauscher-Harz,
- Quervernetze Polysachharide (Sephadex, Sepharose), und/oder
- Aktivkohle- Ionenaustauscher-Harz-Mischung oder -Schichtung
enthält.

In dieser Reinigungsstufe werden dem zu reinigenden Wasser partikuläre und teils gelöste Stoffe entzogen, die durch Größenausschluss oder Adsorption durch das Reinigungsmedium zurückgehalten werden.

Als geeignete Beispiele stellen sich dabei die in der folgenden Tabelle gezeigten Ausführungsformen dar, wobei in der zweitgenannten Ausführungsform das erste und das zweite Reinigungsmedium beispielsweise jeweils eine Aktivkohle-Ionenaustauscher-Harz-Mischung oder -Schichtung mit ggf. unterschiedlicher quantitativer Zusammensetzung aufweisen.

**Tabelle 1**

| | **Erstes Reinigungsmedium** | **Zweites Reinigungsmedium** |
|---|---|---|
| **Ausführungsbeispiel 1** | Aktivkohle | Umkehrosmosemodul |
| **Ausführungs-beispiel 2 (nicht erfindungsgemäß)** | Aktivkohle-Ionenaustauscher-Harz-Mischung oder -Schichtung mit einem Anteil von ≥ 10 und ≤ 40 Gew.-% Aktivkohle | Aktivkohle-Ionenaustauscher-Harz-Mischung oder -Schichtung mit einem Anteil von ≥ 10 und ≤ 40 Gew.-% Aktivkohle |
| **Ausführungsbeispiel 3 (nicht erfindungsgemäß)** | Aktivkohle | Aktivkohle |
| **Ausführungs-beispiel 4 (nicht erfindungsgemäß)** | Ionenaustauscher-Harz | Ionenaustauscher- Harz |

In der zweiten Ausführungsform spricht man generell von "zu reinigendem Wasser" und "gereinigtem Wasser", während man in der ersten Ausfuhrungsform von "zu reinigendem Wasser", und "Gutwasser" bzw. "Permeat" sowie "Schlechtwasser" oder "Konzentrat" spricht.

Erfindungsgemäß weist die hier offenbarte Reinigungsvorrichtung mindestens einen Deckel auf, der am oberen Ende des Gehäuses angeordnet ist. Nicht erfindungsgemäß weist der Deckel weist nur ein oder zwei Elemente auf, ausgewählt aus der Gruppe
- Einlass für das zu reinigende Wasser
- Auslass für das gereinigte Wasser, und/oder
- Auslass für ggf. bei der Reinigung anfallendes Filtrations- oder Osmoserest ("Schlechtwasser" oder "Konzentrat")

In einigen Ausführungsformen weist der Deckel ferner eine Fritte für den Austritt eines Filtermediums auf. Ggf. kann eine solche Fritte auch zur vorgeschalteten Grobreinigung des zu reinigenden Wassers dienen. In einigen Ausführungsformen weist der Deckel zwei Fritten auf.

Unter dem Begriff "Fritte" werden poröse Materialen verstanden, die beispielsweise gesintertes Polypropylen aufweisen. Alternativ können Glasfritten verwendet werden, die beispielsweise durch oberflächliches Schmelzen von Glaspulver entstehen, wobei die Glaskörner zusammenbacken. In beiden Fällen entsteht ein poröses Material, das in der Labortechnik zum Beispiel als Filter eingesetzt wird. Zuletzt kann aus dem abgeschreckten Werkstoff leicht durch Mahlen ein Pulver hergestellt werden, das ebenfalls Fritte genannt wird.

Eine wie im Vorangehenden beschriebene Reinigungsvorrichtung kann dazu ausgelegt sein, in ein Wasserreinigungssystem integriert zu werden. Offenbart ist weiterhin ein Wasserreinigungssystem, aufweisend eine Reinigungsvorrichtung gemäß obiger Beschreibung.

In einigen Ausführungsformen weist ein solches Wasserreinigungssystem weiterhin mindestens eines der folgenden Elemente zur Wasserbehandlung auf:
- UV-Lampe
- Sterilfilter
- Ultrafilter
- Entgasungsmodul
- Destillationsmodul

Eine Verwendung einer Reinigungsvorrichtung oder eines Wasserreinigungssystems gemäß obiger Beschreibung kann eine oder mehrere Aufgaben betreffen, ausgewählt aus der Gruppe enthaltend
- die Aufreinigung und Erzeugung von Rein- oder Reinstwasser zu Laborzwecken
- die Aufreinigung von Trinkwasser und Wasser für die Lebensmittelherstellung
- die Aufreinigung von Wasser für die Herstellung von pharmazeutischen Produkten
- die Entsalzung von Meer- oder Brackwasser
- die Aufreinigung und Erzeugung von Wasser für medizinische Zwecke
- die Aufreinigung und Erzeugung von Prozesswasser für industrielle Prozesse, und/oder
- die Aufreinigung von Abwasser.

### Kurze Beschreibung der Abbildungen

In den Figuren 1, 2A, 2B, 3, 4a und 4b sind Konstruktionszeichnungen widergegeben, so dass sich für die gezeigten beispielhaften Ausführungsformen die Verhältnisse von Dimensionen zueinander den Figuren entnehmen lassen.
**Figur 1** zeigt eine Reinigungsvorrichtung mit einem Gehäuse 11, das eine Aufnahme 12 für ein erstes Reinigungsmedium, eine weitere Aufnahme 13 für ein zweites Reinigungsmedium mit im Wesentlichen kreisrunden Querschnitt sowie zwei Auf- oder Abstiegskanäle 14 und 15 aufweist. An einander gegenüberliegenden Enden des Gehäuses befinden sich ein Deckel 16 und ein Fußelement 17.
**Figur 2A** zeigt von unten einen Deckel einer Reinigungsvorrichtung mit einem Einlass 21 und Auslässen 22 und 23. Bereiche 24, 25, 26, 27 und 28 sind so ausgelegt, dass sie geometrisch zu Elementen der Reinigungsvorrichtung passen. Ein Durchlass 29 ermöglicht den Durchtritt von Fluid wie z.B. Flüssigkeit.
**Figur 2B** zeigt einen nicht erfindungsgemäßen weiteren Deckel eine Reinigungsvorrichtung von unten. Elemente entsprechen großenteils grundsätzlich denen von Fig. 2A und sind daher nicht erneut durchgehend mit Bezugszeichen versehen. Ein mittig angeordneter Auslass endet blind. Dieser blind endende Auslass unterscheidet sich von Fig. 2A; ebenfalls ist Auslass 22' an anderer Position angeordnet als Auslass 22 in Fig. 2A.
**Figur 3** zeigt von oben ein Fußelement einer Reinigungsvorrichtung mit Bereichen 31, 32, 33 und 34, die so ausgelegt sind, dass sie geometrisch zu Elementen der Reinigungsvorrichtung passen. Durchlässe 35 und 36 ermöglichen den Durchtritt von Fluid wie z.B. Flüssigkeit.
**Figur 4a** zeigt eine nicht erfindungsgemäße Reinigungsvorrichtung inklusive Deckel und Fußelement. Schematisch angegeben ist der Strömungsverlauf durch Aufnahmen 12 und 13 und Auf- oder Abstiegskanäle 14 und 15 der Reinigungsvorrichtung sowie Einlass 21 und Auslass 22' des Deckels.
**Figur 4b** zeigt ebenfalls eine Reinigungsvorrichtung inklusive Deckel und Fußelement. Schematisch angegeben ist der Strömungsverlauf durch Aufnahmen 112 und 113 und Auf- oder Abstiegskanäle 114 und 115 der Reinigungsvorrichtung sowie Einlass 21 und Auslässe 22 und 23 des Deckels.
**Figur** 5 zeigt schematisch denkbare und tatsächliche Geometrien für das Gehäuse 11, Aufnahmen 12 und 13 (Fig. 5A und 5B) und Auf- oder Abstiegskanäle 14 und 15 (Fig. 5C). Die Lage des Deckels 16 ist in Fig. 5C angedeutet.

### Ausführliche Beschreibung bevorzugter Ausführungsformen

Es ist zu beachten, dass die Figuren und Beispiele nur beschreibenden Charakter haben und nicht dazu gedacht sind, die Erfindung in irgendeiner Form einzuschränken.

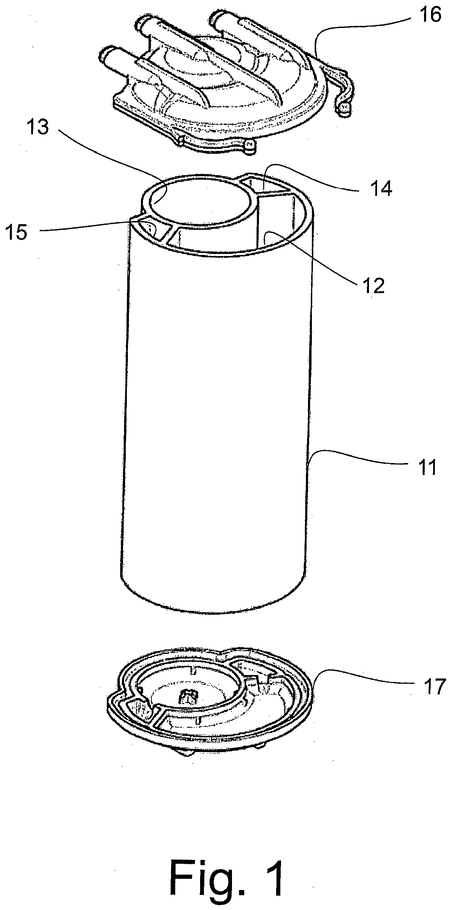

Fig. 1 zeigt eine Reinigungsvorrichtung, aufweisend ein Gehäuse 11 mit einer Längsachse, einem oberen und einem unteren Ende und einen im Wesentlichen kreisrunden Querschnitt. Das Gehäuse 11 weist ferner parallel zur Längsachse des Gehäuses 11 angeordnet eine Aufnahme 12 für ein erstes Reinigungsmedium sowie eine weitere Aufnahme 13 für ein zweites Reinigungs-medium mit im wesentlichen kreisrunden Querschnitt auf.

Weiterhin weist das Gehäuse 11 zwei Aufstiegskanäle 14 und 15 für das zu reinigende Wasser auf. Das Gehäuse 11 weist weiterhin einen Deckel 16 auf, der am oberen Ende des Gehäuses angeordnet ist, sowie ein Fußelement 17, das am unteren Ende des Gehäuses angeordnet ist.

Gut erkennbar ist, dass die Aufnahme 13 für das zweite Reinigungsmedium exzentrisch zur Längsachse des Gehäuses 11 angeordnet ist. In Aufnahme 13 kann beispielsweise ein vorgefertigtes Umkehrosmosemodul mit einem kreisrunden Querschnitt eingebracht werden.

Die Aufstiegskanäle ermöglichen, dass alle Ein- und Auslässe auf einer Ebene im Bereich des Deckels 16 des Gehäuses 11 angeordnet sein können, was eine Integration der hier offenbarten Reinigungsvorrichtung in ein Wasserreinigungssystem erleichtert und zudem bei einem Wechsel einer solchen Kartusche verhindert, dass das in der Kartusche enthaltene Wasser entweicht.

Wie sich Fig. 1 entnehmen lässt (vgl. auch Fig. 5C), kann sich durch die Anordnung der Aufnahme 13 und der Auf- und/oder Abstiegskanäle 14 und 15 in der Reinigungsvorrichtung eine äußere Gehäuseform ergeben die eine Grifffläche bzw. Griffkante aufweist. Eine derartige Ausführungsform kann die Handhabung der Reinigungsvorrichtung erleichtern.

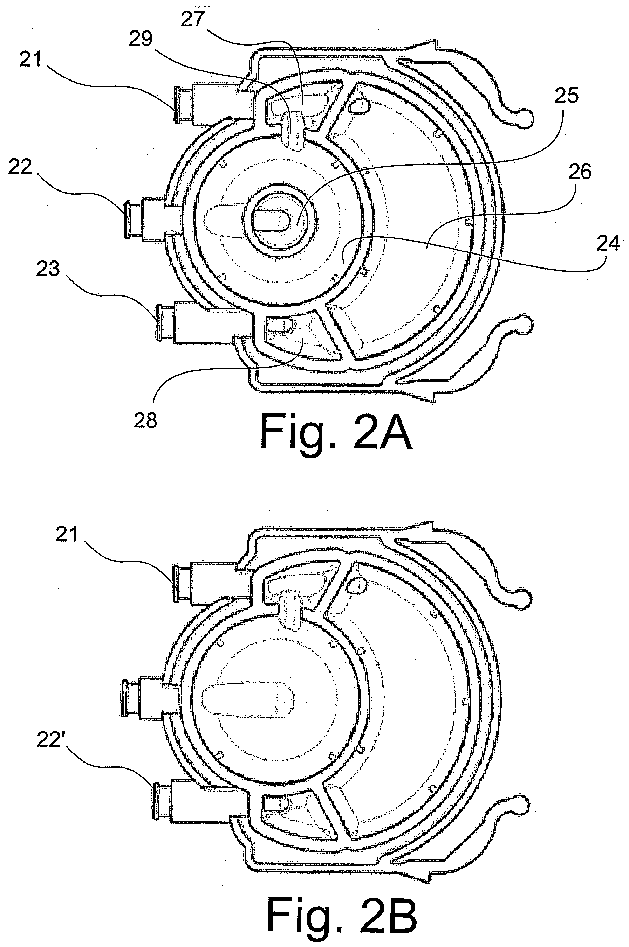

Fig. 2A zeigt einen Deckel einer hier offenbarten Reinigungsvorrichtung in Draufsicht von unten, bei welcher das erste Reinigungsmedium beispielsweise Aktivkohle umfasst, während das zweite Reinigungsmedium ein Umkehrosmosemodul umfasst.

Der Deckel weist einem Einlass 21 für das zu reinigende Wasser und einem Auslass 22 für das gereinigte Wasser ("Gutwasser" oder "Permeat"). Auf Weiterhin ist ein Auslass 23 für bei der Umkehrosmose anfallenden Osmoserest ("Schlechtwasser" oder "Konzentrat") vorgesehen.

Der Deckel weist weiterhin einen Bereich 24 auf, der bei Anordnung des Deckels auf dem Gehäuse oberhalb der Aufnahme für das Umkehrosmosemodul zu liegen kommt, sowie einen Sammelbereich 25, der bei Anordnung des Deckels auf dem Gehäuse oberhalb des inneren Kanals des Umkehrosmosemoduls zu liegen kommt. Über den Sammelbereich 25 wird das Gutwasser (Permeat) dem Auslass 22 zugeleitet.

Das Schlechtweasser (Konzentrat) wird bei einem in der Aufnahme angeordneten Umkehrosmosemodul in dem Bereich außerhalb des konzentrisch in dem Modul angeordneten Kanals gesammelt und über einen Aufstiegskanal dem Auslass 23 zugeleitet.

Ferner weist der Deckel einen Bereich 26 auf, der bei Anordnung des Deckels auf dem Gehäuse oberhalb der Aufnahme für das erste Reinigungsmedium zu liegen kommt, und der mit einer nicht dargestellten Fritte zur vorgeschalteten Grobreinigung des zu reinigenden Wassers ausgefüllt sein kann.

Ferner weist der Deckel Bereiche 27 und 28 auf, die bei Anordnung des Deckels auf dem Gehäuse oberhalb der Aufstiegskanäle zu liegen kommen.

Der Deckel weist ferner den Durchlass 29 auf, durch welchen Wasser aus dem zweiten Aufstiegskanal in den Bereich der Aufnahme für das zweite Reinigungsmedium strömen kann.

Fig. 2B zeigt ebenfalls einen Deckel einer hier offenbarten Reinigungsvorrichtung in Draufsicht von unten mit einem Einlass 21 für das zu reinigende Wasser und einem Auslass 22' für das gereinigte Wasser. Da in dieser Ausführungsform das zweite Reinigungsmedium nicht auf dem Prinzip der Umkehrosmose beruht, fällt hier kein abzuleitender Osmose- oder Filtrationsrest ("Schlechtwasser" oder "Konzentrat") an, sodass der mittig angeordnete Auslass blind endet. Wichtig ist, dass der Auslass 22' an anderer Stelle angeordnet ist als der Auslass 22 für das Gutwasser (Permeat) der Umkehrosmose in Fig. 2A. Dort wird das das Gutwasser (Permeat) ja im zentralen Kanal des Umkehrosmosemoduls gesammelt und in einen Sammelbereich 25 des Deckels geleitet, der bei Anordnung des Deckels auf dem Gehäuse oberhalb dieses Kanals zu liegen kommt.

Gut erkennbar ist in Fig. 2, dass alle Ein- und Auslässe auf nahezu einer Ebene im Bereich des Deckels angeordnet sind, was eine Integration der hier offenbarten Reinigungsvorrichtung in ein Wasserreinigungssystem erleichtert.

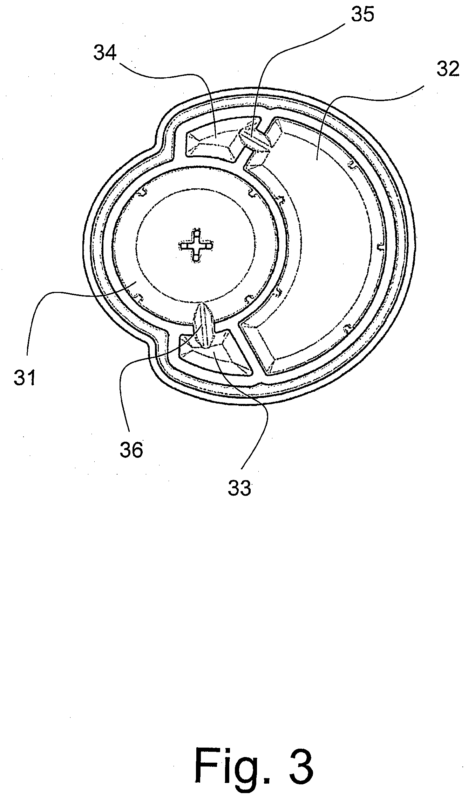

Fig. 3 zeigt ein Fußelement einer hier offenbarten Reinigungsvorrichtung in Draufsicht von oben. Gut erkennbar sind die Bereiche 31, 32, 33 und 34, die bei Anordnung des Fußelements an dem Gehäuse unterhalb der Aufnahmen für das zweite und das erste Reinigungsmedium bzw. unterhalb der Aufstiegskanäle zu liegen kommen.

Das Fußelement weist ferner die Durchlässe 35 und 36 auf, durch welche Wasser aus dem ersten Reinigungsmedium in den ersten Aufstiegskanal und aus dem aus dem zweiten Reinigungsmedium in den zweiten Aufstiegskanal strömen kann.

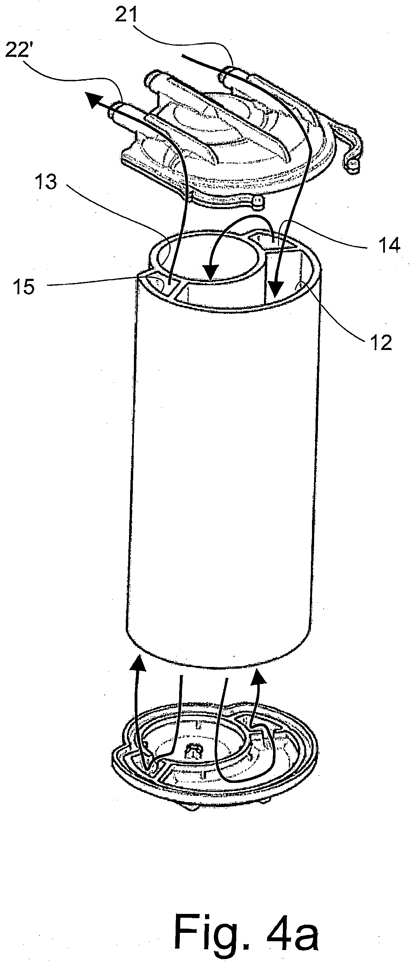

Fig. 4a zeigt den Strömungsverlauf in einer hier offenbarten Reinigungsvorrichtung ohne Umkehrosmosemodul als zweites Reinigungsmedium. In dieser Ausführungsform können das erste und das zweite Reinigungsmedium beispielsweise jeweils eine Aktivkohle-Ionenaustauscher-Harz-Mischung oder -Schichtung mit ggf. unterschiedlicher quantitativer Zusammensetzung aufweisen.

Es ist erkennbar, dass zu reinigendes Wasser durch den Einlass 21 einströmt, das in der ersten Aufnahme 12 angeordnete, nicht dargestellte erste Reinigungsmedium passiert, durch den ersten Aufstiegskanal 14 in das in der zweiten Aufnahme 13 angeordnete, nicht dargestellte zweite Reinigungsmedium gelangt, dieses passiert und anschließend durch den zweiten Aufstiegskanal 15 in Richtung Auslass 22' für das gereinigte Wasser geleitet wird.

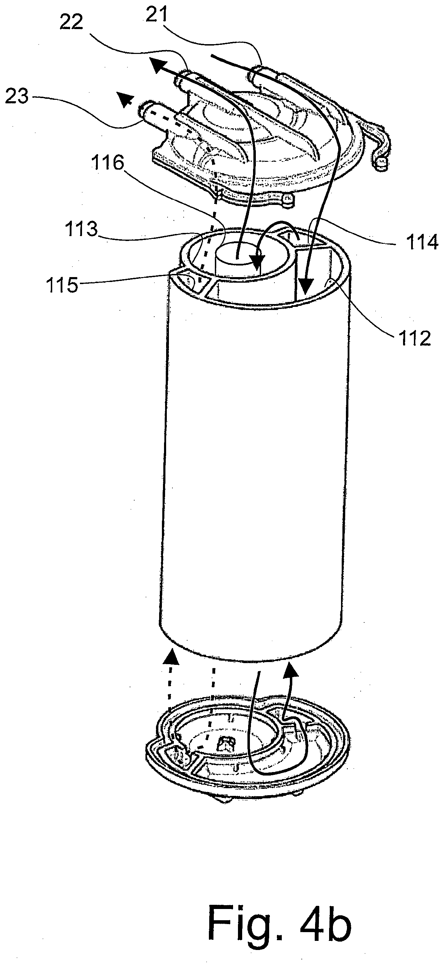

Fig. 4b zeigt den Strömungsverlauf in einer hier offenbarten Reinigungsvorrichtung, bei welcher das erste Reinigungsmedium beispielsweise Aktivkohle umfasst, während das zweite Reinigungsmedium ein Umkehrosmosemodul umfasst. Es ist erkennbar, dass zu reinigendes Wasser durch den Einlass 21 einströmt, das in der ersten Aufnahme 112 angeordnete, nicht dargestellte erste Reinigungsmedium passiert, durch den ersten Aufstiegskanal 114 in das in der zweiten Aufnahme 113 angeordnete Umkehrosmosemodul 116 gelangt, und dieses passiert.

Dabei verbleibt das bei der Reinigung anfallende Schlechtwasser (oder Konzentrat, gestrichelt dargestellt) im äußeren Bereich des Umkehrosmosemoduls, und wandert nach unten, von wo es anschließend durch den zweiten Aufstiegskanal 115 in Richtung Auslass 23 für das Schlechtwasser (oder Konzentrat) geleitet wird.

Das bei der Umkehrosmose anfallende Gutwasser (oder Permat) gelangt in den inneren Bereich des Umkehrosmosemoduls 116 und wird von dort aus in Richtung Auslass 22 für das Gutwasser oder (Permeat) geleitet.

Fig. 5 zeigt iterativ die Entwicklung der Flächenausnutzung für die Aufnahmen 12 und 13 fürs erste und zweite Reinigungsmedium in einem Gehäuse 11 mit einem im Wesentlichen runden Querschnitt einnehmen.

Der Begriff "im wesentlichen runder Querschnitt" meint, dass die Grundfläche des Gehäuses von einer Kreisform, einer Ellipse oder einem Oval abgeleitet ist, aber Ausnehmungen oder ähnliche Modifikationen aufweisen kann. Bevorzugt handelt es sich dabei überdies um einen im Wesentlichen kreisrunden Querschnitt.

Gut erkennbar ist, dass die Aufnahme 13 für das zweite Reinigungsmedium exzentrisch zur Längsachse des Gehäuses 11 angeordnet ist. In Aufnahme 13 kann beispielsweise ein vorgefertigtes Umkehrosmosemodul mit einem kreisrunden Querschnitt eingebracht werden.

Die Aufnahme 12 für das erste Reinigungsmedium kann im Prinzip die verbleibende, nicht von der Aufnahme 13 für das zweite Reinigungsmedium eingenommene Fläche des Gehäuses 11 einnehmen. Aus strömungstechnischen Gründen macht es dabei jedoch keinen Sinn, diese Fläche bis in die äußersten Ecken auszunutzen, weil sich dabei tote, von zu reinigendem Wasser nicht durchspülte Winkel bilden würden. Diese Bereiche können mindestens abschnittsweise für die Aufstiegskanäle 14 und 15 genutzt werden. Ferner können die nicht sinnvoll mit Aufnahmen für Reinigungsmedien oder Aufstiegskanäle verwendbaren Bereich des im Wesentlichen kreisrunden Querschnitts des Gehäuses durch Ausnehmungen oder ähnliche Modifikationen abgewandelt sein.

Letztlich ergibt sich dabei für die Aufnahme 12 ein in etwa sichelförmiger Querschnitt, der von zu reinigendem Wasser nicht durchspülte spitze ("tote") Winkel vermeidet.

Gut ist auch erkennbar, dass sich in einer bevorzugten Ausführungsform die Aufnahme für das zweite Reinigungsmedium zwar exzentrisch zur Längsachse des Gehäuses angeordnet ist, jedoch innerhalb des runden Querschnitts des Deckels 16 verbleibt, der die Form des Gehäuses 11 im Wesentlichen bestimmt.

Es ist zu beachten, dass die in Fig. 5A dargestellte Form fertigungstechnisch nicht herstellbar ist.

## Patentansprüche

1. Reinigungsvorrichtung für Wasser, aufweisend ein Gehäuse (11) mit einer Längsachse, einem oberen und einem unteren Ende und einen im Wesentlichen runden Querschnitt, dessen Grundfläche von einer Kreisform, einer Ellipse oder einem Oval abgeleitet ist, welcher Ausnehmungen aufweist,
ferner aufweisend eine parallel zur Längsachse des Gehäuses (11) angeordnete Aufnahme (12) für ein erstes Reinigungsmedium mit einem darin angeordneten ersten Reinigungsmedium, welche einen im Wesentlichen sichelförmigen Querschnitt aufweist, sowie eine parallel und exzentrisch zur Längsachse des Gehäuses (11) angeordnete und einen im Wesentlichen runden Querschnitt aufweisende Aufnahme (13) für ein zweites Reinigungsmedium mit einem darin angeordneten zweiten Reinigungsmedium, wobei es sich bei dem zweiten Reinigungsmedium um ein Umkehrosmosemodul handelt,
weiterhin aufweisend zwei parallel zur Längsachse des Gehäuses (11) angeordnete Auf- oder Abstiegskanäle (14,15) für das zu reinigende Wasser,
wobei die Aufnahme (12) für das erste Reinigungsmedium, die Auf- oder Abstiegskanäle (14,15) und die Ausnehmungen die nicht von der Aufnahme (13) für das zweite Reinigungsmedium eingenommene Fläche des Gehäuses (11) einnehmen,
wobei jeweils ein Auf- oder Abstiegskanal (14,15) an die äußeren Ecken der Aufnahme (12) für das erste Reinigungsmedium angrenzt,
weiterhin aufweisend mindestens einen Deckel (16), der am oberen Ende des Gehäuses (11) angeordnet ist, wobei besagter Deckel (16) einen Einlass (21) für das zu reinigende Wasser, einen Auslass (22) für das gereinigte Wasser und einen Auslass (23) für bei der Reinigung anfallende Konzentrat aufweist, sowie einen Bereich (24), der bei Anordnung des Deckels (16) auf dem Gehäuse (11) oberhalb der Aufnahme (13) für das Umkehrosmosemodul zu liegen kommt, einen Sammelbereich (25), der bei Anordnung des Deckels (16) auf dem Gehäuse (11) oberhalb eines inneren Kanals des Umkehrosmosemoduls zu liegen kommt und fluidisch mit dem Auslass (22) für gereinigtes Wasser verbunden ist, einen Bereich (26), der bei Anordnung des Deckels (16) auf dem Gehäuse (11) oberhalb der Aufnahme (12) für das erste Reinigungsmedium zu liegen kommt und fluidisch mit dem Einlass (21) verbunden ist, sowie Bereiche (27, 28), die bei Anordnung des Deckels (16) auf dem Gehäuse (11) oberhalb der Aufstiegskanäle (14,15) zu liegen kommen, wobei der Bereich (28), der auf dem zweiten Aufstiegskanal (15) zu liegen kommt, fluidisch mit dem Auslass (23) für Konzentrat verbunden ist, und einen Durchlass (29), durch welchen Wasser aus dem zweiten Aufstiegskanal (15) in den Bereich der Aufnahme (13) für das zweite Reinigungsmedium strömen kann,
weiterhin aufweisend ein Fußelement, das am unteren Ende des Gehäuses (11) angeordnet ist, mit Bereichen (31, 32, 33 und 34), die so ausgelegt sind, dass sie geometrisch zu Elementen der Reinigungsvorrichtung passen und bei Anordnung des Fußelements an dem Gehäuse (11) unterhalb der Aufnahmen (12,13) für das zweite und das erste Reinigungsmedium bzw. unterhalb der Aufstiegskanäle (14,15) zu liegen kommen und zwei Durchlässe (35, 36), durch welche Wasser aus dem ersten Reinigungsmedium in den ersten Aufstiegskanal (14) und aus dem zweiten Reinigungsmedium in den zweiten Aufstiegskanal (15) strömen kann.

2. Reinigungsvorrichtung gemäß Anspruch 1, wobei es sich bei dem ersten Reinigungsmedium um ein Modul, eine Schüttung, eine Patrone oder eine Kartusche handelt, die ein Medium ausgewählt aus der Gruppe
• Aktivkohle
• Ionenaustauscher-Harz,
• Quervernetze Polysachharide (Sephadex, Sepharose), und/oder
• Aktivkohle- Ionenaustauscher-Harz-Mischung oder -Schichtung
enthält.

3. Reinigungsvorrichtung gemäß einem der vorhergehenden Ansprüche, wobei besagter Deckel (16) ferner eine Fritte für den Austritt eines Filtermediums aufweist.

4. Wasserreinigungssystem, aufweisend eine Reinigungsvorrichtung gemäß einem der vorhergehenden Ansprüche.

5. Wasserreinigungssystem gemäß Anspruch 4, ferner aufweisend mindestens eines der folgenden Elemente zur Wasserbehandlung:
• UV-Lampe
• Sterilfilter
• Ultrafilter
• Entgasungsmodul
• Destillationsmodul.

## Claims

1. A water treatment apparatus, comprising a housing (11) having a longitudinal axis, an upper and a lower end and a substantially round cross-section, whose base is derived from a circular shape, an ellipsis or an oval, which has recesses,
further having a receptacle (12), arranged parallel to the longitudinal axis of the housing (11) for a first purification medium with a first purification medium arranged therein, which has a substantially crescent-shaped cross-section, as well as receptacle (13) arranged parallel and eccentrically to the longitudinal axis of the housing (11) for a second purification medium with a second purification medium arranged therein, wherein the second purification medium is a reverse osmosis module,
further having two ascent or descent channels (14, 15) arranged parallel to the longitudinal axis of the housing (11) for the water to be purified,
wherein the receptacle (12) for the first purification medium, the ascent or descent channels (14, 15) and the recesses occupy the area of the housing (11) not occupied by the receptacle (13) for the second purification medium, wherein in each case an ascent or descent channel (14, 15) adjoins the exterior corners of the receptacle (12) for the first purification medium,
further having at least one cover lid (16) which is disposed at the upper end of the housing (11), wherein the cover lid (16) has an inlet (21) for the water to be purified, an outlet (22) for the purified water and an outlet (23) for any residue following the purification, as well as a region (24) which in the arrangement of the cover lid (16) on the housing (11) comes to rest above the receptacle (13) for the reverse osmosis module, a collection region (25), which in the arrangement of the cover lid (16) on the housing (11) comes to rest above an inner channel of the reverse osmosis module and is fluidically connected to the outlet (22) for purified water, a region (26), which in the arrangement of the cover lid (16) on the housing (11) comes to rest above the receptacle (12) for the first purification medium and is fluidically connected to the inlet (21), as well as regions (27, 28) which in the arrangement of the cover lid (16) on the housing (11) come to rest above the ascent channels (14, 15), wherein the region (28) which comes to rest above the second ascent channel (15) is fluidically connected to the outlet (23) for concentrate, and a passage (29) through which water can flow from the second ascent channel (15) into the region of the receptacle (13) for the second purification medium,
further having a base element which is arranged on the lower end of the housing (11), with regions (31, 32, 33 and 34) that are designed such that they geometrically match elements of the water treatment apparatus and in the arrangement of the base element on the housing (11) come to rest under the receptacles (12, 13) for the second and the first purification medium or come to rest under the ascent channels (14, 15) and two passages (35, 36), through which water can flow from the first purification medium into the first ascent channel (14) and from the second purification medium into the second ascent channel (15).

2. The purification device as claimed in claim 1, wherein the first purification medium is a module, a bed, a capsule or a cartridge, which contains a medium selected from the group
• an activated charcoal,
• ion exchange resin,
• cross-linked polysaccharides (Sephadex, Sepharose), and/or
• activated charcoal-ion exchange resin mixture or stack.

3. The purification device as claimed in any of the preceding claims, wherein the cover lid (16) further has a frit for the emergence of a filter medium.

4. A water treatment apparatus having a purification device as claimed in any of the preceding claims.

5. The water treatment apparatus as claimed in claim 4, further having at least one of the following elements for water treatment:
• a UV lamp,
• a sterile filter,
• an ultra filter,
• a degassing module, and
• a distillation module.

## Revendications

1. Dispositif d'épuration pour de l'eau, présentant un boîtier (11) avec un axe longitudinal, une extrémité supérieure et une extrémité inférieure et une section transversale sensiblement ronde, dont la surface de base est dérivée d'une forme circulaire, d'une ellipse ou d'un ovale, laquelle présente des évidements,
présentant en outre un logement (12), disposé parallèlement à l'axe longitudinal du boîtier (11), pour un premier milieu d'épuration, avec un premier milieu d'épuration disposé dedans, lequel présente une section transversale sensiblement en forme de croissant, ainsi qu'un logement (13) disposé de manière parallèle et excentrée par rapport à l'axe longitudinal du boîtier (11) et présentant une section transversale sensiblement ronde pour un deuxième milieu d'épuration avec un deuxième milieu d'épuration disposé dedans, dans lequel il s'agit pour le deuxième milieu d'épuration d'un module d'osmose inverse,
présentant en outre deux canaux ascendants ou descendants (14, 15) pour l'eau à épurer disposés parallèlement à l'axe longitudinal du boîtier (11),
dans lequel le logement (12) pour le premier milieu d'épuration, les canaux ascendants ou descendants (14, 15) et les évidements occupent la surface du boîtier (11) non occupée par le logement (13) pour le deuxième milieu d'épuration,
dans lequel respectivement un canal ascendant ou descendant (14, 15) est respectivement adjacent aux coins extérieurs du logement (12) pour le premier milieu d'épuration,
présentant en outre au moins un couvercle (16), qui est disposé à l'extrémité supérieure du boîtier (11), dans lequel ledit couvercle (16) présente une entrée (21) pour l'eau à épurer, une sortie (22) pour l'eau épurée et une sortie (23) pour le concentré produit lors de l'épuration, ainsi qu'une zone (24), qui, lorsque le couvercle (16) est disposé sur le boîtier (11), vient se situer au-dessus du logement (13) pour le module d'osmose inverse, une zone de collecte (25), qui, lorsque le couvercle (16) est disposé sur le boîtier (11), vient se situer au-dessus d'un canal intérieur du module d'osmose inverse et est en liaison fluidique avec la sortie (22) pour l'eau épurée, une zone (26), qui, lorsque le couvercle (16) est disposé sur le boîtier (11), vient se situer au-dessus du logement (12) pour le premier milieu d'épuration et est en liaison fluidique avec l'entrée (21), ainsi que des zones (27, 28), qui, lorsque le couvercle (16) est disposé sur le boîtier (11), viennent se situer au-dessus des canaux ascendants (14, 15), dans lequel la zone (28), qui vient se situer sur le deuxième canal ascendant (15) est en liaison fluidique avec la sortie (23) pour le concentré, et un passage (29), par lequel l'eau peut circuler du deuxième canal ascendant (15) dans la zone du logement (13) pour le deuxième milieu d'épuration,
présentant en outre un élément pied, qui est disposé à l'extrémité inférieure du boîtier (11), avec des zones (31, 32, 33 et 34), qui sont conçues de sorte qu'elles s'adaptent de manière géométrique à des éléments du dispositif d'épuration et, lorsque l'élément pied est disposé sur le boîtier (11), viennent se situer au-dessous des logements (12, 13) pour le deuxième et le premier milieu d'épuration ou au-dessous des canaux ascendants (14, 15) et deux passages (35, 36), par lesquels l'eau peut circuler du premier milieu d'épuration dans le premier canal ascendant (14) et du deuxième milieu d'épuration dans le deuxième canal ascendant (15) .

2. Dispositif d'épuration selon la revendication 1, dans lequel il s'agit pour le premier milieu d'épuration d'un module, d'un matériau en vrac, d'une cartouche ou d'une cartouche, qui contient un milieu choisi dans le groupe
• du charbon actif
• de la résine échangeuse d'ions,
• des polysaccharides réticulés (Sephadex, Sepharose), et/ou
• d'un mélange ou d'une stratification de charbon actif-résine échangeuse d'ions.

3. Dispositif d'épuration selon l'une quelconque des revendications précédentes, dans lequel ledit couvercle (16) présente en outre une fritte pour la sortie d'un milieu filtrant.

4. Système d'épuration d'eau, présentant un dispositif d'épuration selon l'une quelconque des revendications précédentes.

5. Système d'épuration d'eau selon la revendication 4, présentant en outre au moins un des éléments suivants pour le traitement de l'eau :
• lampe UV
• filtre stérile
• ultrafiltre
• module de dégazage
• module de distillation.
